(19) Europäisches Patentamt / European Patent Office / Office européen des brevets

(11) **EP 4 570 763 B1**

(12) **EUROPEAN PATENT SPECIFICATION**

(45) Date of publication and mention
of the grant of the patent:
**11.02.2026 Bulletin 2026/07**

(21) Application number: **23215752.9**

(22) Date of filing: **12.12.2023**

(51) International Patent Classification (IPC):
**C03B 5/027** *(2006.01)* **C03B 5/03** *(2006.01)*
**C03B 5/185** *(2006.01)*

(52) Cooperative Patent Classification (CPC):
**C03B 5/027; C03B 5/03; C03B 5/185**

(54) **METHOD AND VESSEL FOR ELECTRICALLY HEATING A GLASS MELT**

VERFAHREN UND GEFÄSS ZUM ELEKTRISCHEN BEHEIZEN EINER GLASSCHMELZE

PROCÉDÉ ET RÉCIPIENT POUR LE CHAUFFAGE ÉLECTRIQUE D'UN BAIN DE VERRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**18.06.2025 Bulletin 2025/25**

(73) Proprietor: **SCHOTT AG**
**55122 Mainz (DE)**

(72) Inventors:
• **Hauf, Moritz**
**55122 Mainz (DE)**
• **Hahn, Michael**
**55122 Mainz (DE)**
• **Wolf, Sebastian**
**55122 Mainz (DE)**
• **Weidmann, Günter**
**55122 Mainz (DE)**

• **Orth, Oliver**
**55122 Mainz (DE)**
• **Karetta, Frank**
**55122 Mainz (DE)**
• **Ohmstede, Volker**
**55122 Mainz (DE)**
• **Schmidbauer, Wolfgang**
**55122 Mainz (DE)**

(74) Representative: **Fuchs Patentanwälte
Partnerschaft mbB
Tower 185
Friedrich-Ebert-Anlage 35-37
60327 Frankfurt am Main (DE)**

(56) References cited:
CN-A- 1 721 348          US-A- 3 395 237
US-A- 3 818 112          US-A- 4 600 426
US-A1- 2013 279 532

**Description**

The present invention relates to a method and vessel for electrically heating a glass melt wherein an excellent glass quality is achieved by means of a direct electrical heating using multiple inverter-based heating circuits which may be independently adjusted in amplitude and optionally in phase angle. Furthermore, a modification of the temperature zones within the vessel may be achieved without requiring any rewiring or repositioning of the electrodes.

Background

The glassmaker has a number of options for heating a glass melt, e.g. gas burners, electric resistance heating, or inductive heating. As of today, gas is the predominant heat source used in glass melting.

The production of glass has a quite high carbon footprint due to the amount of energy required for the melting and fining processes. This is particularly the case for heating by gas burners which use natural gas. A reduction of the carbon footprint is possible if, instead, an electric resistance heating is used which is provided with power from renewable energy sources like wind power, water power, or solar panels. The same power sources may also be used to produce hydrogen by electrolysis which then can be used to feed the gas burners. While the latter requires less changes to an existing glass production facility with a gas burner heating, the intermediate step of electrolysis is of course associated with a considerable energy loss. Hence, a direct use of the electrical power is more desirable. In addition, the heating efficiency of gas burners is generally less efficient than direct electrical heating.

The quality required for a given product depends on its intended use. Some high-quality glasses are used to make products that do not tolerate the occasional bubble and must meet stringent criteria in terms of shape, dimensional variations, and purity (both chemical and optical). Many of these glasses are rather difficult to manufacture not only because of the stringent criteria but also because of high melting temperatures. High melting temperatures may be necessary to achieve melt viscosities sufficient for homogenization and removal of bubbles from the melt. Examples of high-quality glass products include pharmaceutical containers and glass tubes used for making such containers.

It is an object of this invention to provide a method and a melting vessel which result in glass products that meet high quality criteria.

While the use of an electric resistance heating for producing such high quality glass products would be favorable, it faces several difficulties which until the present day have impeded a more widespread application.

One of these difficulties is the corrosion of the electrodes. The corrosion of metal electrodes and its associated material loss strongly depend on the current density at the electrode surface. This problem is particularly pronounced with glass melts having a high electric conductivity because the high electric conductivity requires high current densities for generating enough heat within the glass melt to keep it in the liquid state. When operated at the standard line frequency of 50 Hz or 60 Hz, a considerable amount of the metal of the electrodes dissolves into the glass melt and/or bubbles may form on the electrode surfaces. This material loss of the electrodes is critical particularly for two reasons.

The first reason is obviously the requirement to replace the electrodes at certain intervals. This not only increases the operational costs for the facility but also has an impact on the carbon footprint since for the production of the electrodes a considerable amount of energy is required. Depending on the type of metal used, very high temperatures for melting have to be achieved and the further shaping and handling steps again consume energy. Hence, a frequent exchange of the electrodes significantly increases the carbon footprint of the glass production method. In addition to this, the glass production process has to be stopped for maintenance because it is not possible to simply pull single electrodes out of the melting tank for replacement while the facility continues operation. Hence, when restarting the facility after a replacement of the electrodes, either the whole melting tank filled with the solidified glass melt will have to be heated by burners for re-melting in order to be able to lower the new electrodes into the melt or the glass melt will have to be completely drained from the melting tank before shutting down the process and the process will have to start from scratch by melting new raw materials - again with burners - to prepare a new melt. The amount of energy and the respective carbon footprint required for this shutdown and restarting procedure are even higher than for the production of the electrodes. Of course, the impact on the productivity of the facility is also quite tremendous since it takes days to weeks to reach stable production conditions again which are required for a constant quality glass product.

In addition to the energy required to replace electrodes, the cool-down and re-heating of the melting tank exerts significant stress to the (high-zirconia) refractory materials leading to severe cracks in the infrastructure. As a consequence, a costly replacement of the refractory materials is required. This is one of the main reasons for not being able to reposition or replace electrodes during the lifetime of a melting tank.

The second reason is the just mentioned glass quality. The dissolved metal of the electrodes may cause severe discolorations of the glass melt in different colors depending on the type of metal and glass composition used. While this may be tolerable to a certain extent for cheaper glass products which are dark colored anyway, it is already intolerable for cheaper glass products which are to be completely colorless or to have a certain defined color. For high-quality expensive glass products, this discoloration is an absolute show-stopper which has to be avoided by all means. A contamination of the glass products with metal of the electrodes is also critical where a certain light transmittance, especially in the UV region, is needed. In addition, glass products for medical packaging and semiconductor industries have specified limits of metal particles allowed in their products.

In prior art, (at least partially) electrically heated glass melting vessels are already known. Some of these use more than one heating circuit whose electrodes are operated at the standard line frequency of 50 Hz or 60 Hz. Examples of such glass melting vessels can be found in CZ 24918 U1, DE 10 2018 122 017 A1, WO 2014/036979 A1, JP 9315824 A2, JP 9208228 A2, or US 4,211,887 A which all essentially aim at the generation of a certain thermal profile in the melting vessel for improving the process and/or glass quality. This mainly targets the residence time of the glass melt and in particular its uniformity. By locally heating the melt through local application of energy through the electrodes or creating different heating zones with groups of electrodes in the melting vessel, the residence time spread of the melt can be improved.

The installation of additional electrical heating in gas-fired glass melting vessels with the aim of partially replacing fossil heating with electrical heating has also recently become state of the art. This is usually referred to as boosting by the introduction of electrical energy. However, the share of electrical energy is limited to a few percent in this type of melting tank. Higher power densities lead to losses in glass quality due to electrochemical reactions (e.g., electrode corrosion or bubble generation) and to overheating of the melt and therewith on the one hand overheating of the refractive material of the tank and on the other hand uncontrollable flow profiles.

DE 20 2019 100 870 U1 discloses how energy input can be achieved by installing a high number of electrodes at many electrode positions in gas-fired glass melting vessels. The heating circuits and interconnection of the electrodes are not described. The disadvantage of this solution is that, on the one hand, the large contact areas between glass melt and electrodes lead to secondary faults due to electrode corrosion and, on the other hand, the electrodes generate a high thermal energy loss. This concept has disadvantages in terms of economy (high investment costs and high energy consumption) as well as in terms of glass quality (large glass contact areas) and it is limited in terms of the flexibility of the glass types - the melting vessels are designed for only one single glass type which is soda-lime glass.

WO 2020/229559 A1 discloses another glass melting tank with a high proportion of electrical energy for soda-lime glass. The electrodes are described as flow barriers. Further, it is explained that a flow barrier can be created in the glass melting tank by just one row of electrodes. However, again it is not explained how the electrodes are connected and which electrical concepts are behind them. Per principle this concept is only suitable for the soda-lime glasses which have a low melting temperature. Special glasses with their high melting temperatures would require such high current densities that secondary defects would inevitably occur in the glass at the electrodes, which would prevent the achievement of the required glass quality.

CN 1 721 348 A discloses an electric resistance furnace for any materials which can be resistance melted in an electric furnace, in particular for producing glass such as soda lime glass.

US 3,818,112 A discloses a trigger circuit using phase-fired control (PFC) to regulate the firing angle of TRIACs for controlling the average current between two electrodes in a single heating circuit.

A further problem which is associated with the present design of the electrical heating systems is that there is no flexibility of local energy input for glasses with different compositions (and thus different electrical conductivity), different refining agents, and different requirements for coloring and refining redox systems. In the state of the art, the electrode positions determine the location of the energy input. There is no flexibility to vary the energy input spatially without rebuilding the melting tank or without installing a large number of individual heating circuits and thus a large number of electrodes. Since there are no degrees of freedom in the electrical heating system, it is also not possible to counteract local overheating by process changes. Changing the electrode position in glass melting vessels is only possible with a new construction or modification of the vessel. Since glass melting tanks usually cannot be cooled down due to the high-temperature refractory materials and the electrode materials used in the special glass industry, rebuilding is not possible at all here, and in some cases the only option for variations in the glasses is to build a completely new melting tank, which involves high investment costs and long downtimes and is therefore not an economically viable option.

It is another object of this invention to provide a method and a melting vessel which provide an increased flexibility regarding the glass types and more options for influencing the melt flow for optimal glass quality. In particular, the necessary adaptations should not require constructional work on the melting vessel and should ideally be possible during production.

## Summary of this disclosure

In a first aspect, this disclosure relates to a method for electrically heating a glass melt in a melting vessel comprising at least a first heating circuit and a second heating circuit, each heating circuit comprising a power source and at least two electrodes immersible into the glass melt, by providing an alternating current from the power sources to the electrodes wherein the electrodes of the heating circuits are arranged such that a path of current through the glass melt between the electrodes of the first heating circuit and a path of current through the glass melt between the electrodes of the second heating circuit are partially geometrically overlapping in an overlapping region; and a spatial distribution of a power density in the vessel is adjusted by setting the shift in the phase angle of the currents between the first heating circuit and the second heating circuit.

When referring to the paths of current of the two heating circuits being "partially overlapping" in an overlapping region this may include cases where the overlapping region is point-shaped, i.e., the two paths are only intersecting in a single point, and cases where the overlapping region is linear-shaped, i.e., the two paths are collinear. In the latter alternative, this may mean that the paths are partially overlapping either regarding both of them or only one. If the term "partially" applies for both of them, the paths are coextensive for a certain length and each have a further length where they do not overlap. Regarding the electrodes of two heating circuits A and B, this means an arrangement in the form of $A_1 | B_1 | A_2 | B_2$ along the path of current. If the term "partially" applies for only one of them while the other one is fully overlapping, the shorter one of the paths lies within the longer one which has a non-overlapping length to both sides of the smaller path. Regarding the arrangement of the electrodes, this results in the form of $A_1 | B_1 | B_2 | A_2$ along the path of current. While this latter arrangement may be less versatile than the other ones, it is equally suitable for cases where versatility is not a primary goal.

In a second aspect, this disclosure relates to a melting vessel for electrically heating a glass melt comprising at least a first heating circuit and a second heating circuit, each heating circuit comprising a power source and at least two electrodes immersible into the glass melt, wherein the electrodes of the heating circuits are arranged such that when provided with a current, a path of current through the glass melt between the electrodes of the first heating circuit and a path of current through the glass melt between the electrodes of the second heating circuit are partially geometrically overlapping in an overlapping region; and the power source is an inverter electrically connected via a power factor correction to a transformer.

Details of this disclosure

The details of this disclosure relate to the aspects described in the summary of this disclosure. Any of the features of the embodiments described hereinafter may relate to the method for electrically heating a glass melt as well as the glass melting vessel for electrically heating a glass melt.

A "glass melt" is a volume of a batch of glass raw materials that has a viscosity of less than $10^{7.6}$ dPas. Such a viscosity can be measured using the fiber elongation method, e.g. as described in DIN ISO 7884-6:1998-02, where the elongation speed of a fiber with a defined diameter is determined with different weights at different temperatures.

The temperature at which the glass melt has a viscosity of $10^2$ dPas is herein called "temperature T2". Similarly, the temperature at which the glass melt has a viscosity of $10^4$ dPas is herein called "temperature T4". Temperature T2 is less than 1,500 °C for glass compositions with high contents of alkali metal oxides or alkaline earth metal oxides, such as soda lime glass and other glass compositions. These viscosities can be measured using a rotational viscosimeter, e.g. as described in DIN ISO 7884-2:1998-2. The dependence of viscosity on temperature is determined according to the VFT equation (Vogel-Fulcher-Tammann). The VFT equation is shown below.

$$\lg(\eta/dPas) = A + \frac{B}{(t - t_0)}$$

In the VFT equation, t is the temperature under consideration. A, B and $t_0$ are the so-called VFT constants that are specific for each glass composition.

This disclosure relates to methods which allow for the direct electric heating of all types of glass with multiple heating circuits which can be influenced independently of each other in amplitude and optionally in phase of the current supplied to the electrodes. Further, the method is suitable for all types of melting vessels whose geometries allow for the installation of multiple heating circuits, such as melting tanks, fining tanks, conditioning zones, and flow ducts. It is not limited to rectangular geometries but also works with polygonal or circular geometries. This allows for the creation of highly complex flow profiles in the melt for improving the important parameters for glass quality of the residence time and the sand grain dissolution. Moreover, a continuous glass melting without fossil fuels is possible as the method may not only be used as an electrical additional heating but also as a fully electric heating.

A "melting vessel" is a vessel used for holding a glass melt. The vessel defines a volume that can contain a glass melt. The melting vessel may have a substantially rectangular base, or bottom plate. It may have walls to keep the melt within the vessel. Typically, a melting vessel will not be filled to the rim. A melting vessel may have a superstructure above the glass melt surface ("covered melting vessel"). The superstructure may be vaulted. The "melting vessel" may be a part of a larger melting facility. The term "melting vessel" as used herein is meant as an umbrella term for all containers containing a glass melt which may comprise parts such as a melting tank, a refining tank or refining area, or pipes or ducts connecting the same.

"Residence time" is the time that a given portion of the glass melt spends in the melting vessel before being withdrawn from the melting vessel. Residence time can be measured using so-called tracers, i.e. components that are added to the glass melt so that they can be detected in the product, allowing conclusions as to the time spent in the melting vessel. Examples of tracer compounds are Ca, Sr and Y. The "average residence time" is defined as:

$$\frac{melting\ vessel\ volume\ [m^3]}{melting\ vessel\ throughput\ [\frac{m^3}{h}]}$$

The "minimum residence time" or "shortest residence time" is referring to the shortest time a portion of the glass melt will spend in the vessel. In an ideal scenario, every portion of the glass melt will spend exactly the same amount of time in the vessel. This will create uniform melt properties and, hence, the best glass quality. However, due to a complex flow pattern, vortices, "short-circuit flows", and dead zones in a real vessel, there is a spread of the amount of time around the average residence time. Melt portions in a dead zone or turbulences will spend more time in the vessel while those in a short-circuit flow which refers to a fast stream directly from the entry to the exit of the vessel will exit faster. To improve the glass melting process, the glass maker consequently aims at a spread of the residence time as small as possible and in particular tries to shift the minimum residence time towards the average residence time because the fast-exiting portions have a high risk of insufficiently melted batch materials or an insufficiently homogenized melt. One option for achieving this goal is to influence the temperature zones in the melt and therewith the flow patterns.

A "heating circuit" as used herein is meant to comprise a power source and at least two electrodes immersible into the glass melt (and of course the electric lines required for connecting them). The two electrodes are the minimum requirement for being able to initiate a current flow in the glass melt when provided with a current from the power source. However, this does not exclude that one or more of the electrodes of one heating circuit are also part of another heating circuit, i.e., one electrode may be connected to two different power sources. Hence, the total number of (physical) electrodes in a melting vessel may be less than the sum of the (logical) electrodes in the defined heating circuits in the melting vessel.

In embodiments, one or more or all of the electrodes may be rod-shaped, dome-shaped, plate-shaped, tube-shaped, or block-shaped. The rod-shaped electrodes are more versatile in arranging and easier to replace. Moreover, since the rod-shaped electrodes are spot-like sources of current, the zones of input of energy into the melt are easier to design to the desired layout. In some applications, also dome-shaped, tube-shaped, or block-shaped electrodes may be used in place of the rod-shaped electrodes.

In embodiments, one or more or all of the electrodes may be located partially or completely in or on a wall of the melting vessel and/or in or on the bottom of the melting vessel and/or constitute a wall section and/or a bottom section of the melting vessel. One or more electrodes may be located partially or completely in or on a wall of the melting vessel. One or more electrodes may be located partially or completely in or on a bottom plate of the melting vessel. In an embodiment, one or more electrodes constitute a wall section and/or a bottom plate section of the melting vessel. In an embodiment, one or more of the electrodes may be extending upwardly from the bottom of the melting vessel up to at least 20 % glass melt depth, at least 30 %, at least 40 %, at least 50 %, at least 60 %, at least 70 % or at least 80 % of the glass melt depth. Optionally, the one or more electrodes may extend up to 100 %, up to 95 % or up to 90 % of the glass melt depth from the bottom of the melting vessel. Optionally, the one or more electrodes may extend from 50 % to 100 %, from 60 % to 95 %, or from 70 % to 90 % of the glass melt depth from the bottom of the melting vessel.

The disclosed method and melting vessel can achieve several advantages over those of prior art. In particular, they achieve a high electric efficiency while keeping the electro corrosion of the electrodes low. Furthermore, they achieve an optimal current distribution in the glass melt based on desired patterns which can be highly complex. They allow for the creation of different zones in the glass melt by targeted current and power distribution in the glass melt. They can create high minimal residence times of the glass melt within the melting vessel and avoid short circuit flows. Finally, they achieve an optimal melting of a glass batch in the melting vessel.

With a wiring scheme or arrangement of the electrodes of the heating circuits, respectively, according to this disclosure, the current density at the single electrodes can be considerably decreased because in the overlapping sections of the two heating circuits a higher power input can be achieved while the number of electrodes and, consequently, the electrode surface area is increased. Hence, the electro corrosion caused on the electrodes can be decreased when the same power input in a certain region of the glass melting vessel is desired or held constant while the power input is increased. A lower amount of electro corrosion will result in an improved glass quality. The possibility to increase the power density in the glass melt allows for a higher percentage of electricity for the heating of the melt or even a fully electric operation and provides also improved glass qualities as well as less $CO_2$ emissions because additional burners may be spared.

In particular when combined with a specific phase shift between the single heating circuits, the method of the present disclosure is able to achieve new degrees of freedom in operation of the melting vessels regarding establishing desirable temperature and flow profiles.

A further huge advantage over the prior art is the possibility to modify the local input of electric energy into the glass melt exclusively by modifying the operation settings of the glass melting vessel. While in prior art for this purpose a repositioning of the electrode arrangement is necessary, in the present disclosure a variation of the phase settings of the heating circuits will suffice. This means an enormous save on costs because as a rule the electrodes are arranged in or on the walls or the bottom of the melting vessel so that whole segments of the refractory material of the wall or bottom through which they extend may have to be replaced or even a completely new melting vessel may have to be built. Only in very exceptional cases, a simple rewiring of the electrodes can successfully be used to reconfigure the melting vessel.

The disclosed method and melting vessel also provide a possibility for the construction of highly flexible new glass melting facilities. The glass melting facilities of the prior art are more or less single purpose facilities as they are optimized for a certain type of glass and its melting behavior in order to achieve the required glass quality and throughput. As a change of this setup is only possible by major reconstruction works on the glass melting vessel, they will be used only for the originally intended purpose. As opposed to this, the method and melting vessel of this disclosure may flexibly be adapted to other types of glass or operation modes simply by altering the phase angle setting of the current in the heating circuits and in some rare cases a rewiring of the heating circuits but no constructional modification of the vessel and its refractory cladding. The achievable higher power input into the melt may also open up the possibility to produce high melting glass types which have not yet been processable in partially or completely electrically heated melting vessels and to reduce the carbon footprint of their production.

In embodiments, the path of current through the glass melt between the electrodes of the first heating circuit and the path of current through the glass melt between the electrodes of the second heating circuit are in the overlapping region collinear or intersect. As mentioned above, the paths of current through the glass melt may be collinear and resulting in the mentioned sequences of the electrodes. A typical setup of this kind which will be exemplified further below are alternating transversal rows of electrodes of two heating circuits extending upwards from the bottom of a melting vessel into the melt along the flow direction of the melt from entry to outlet. An example of intersecting paths may be two longitudinal rows of electrodes of two heating circuits extending upwards from the bottom of a melting vessel along the flow direction into the melt which are connected to rows of electrodes arranged in and along the opposite walls, i.e., one heating circuit between the left floor side and right wall and one heating circuit between the right floor side and the left wall such that the paths of current run crosswise through the melting vessel intersecting about in the center line. This spot-like effect may for example be used very effectively in combination with further heating circuits having collinear arranged paths of current to boost a specific area.

According to the invention, the power source is a transformer or an inverter electrically connected via a power factor correction to a transformer. Both variants of the power source offer several advantages and options. With both of them, the strong increase in power density in the glass melt in the overlapping zone of the heating circuits can be achieved without an increase in the number of the electrodes, as suggested in prior art. The disclosed wiring of the heating circuits keeps the current density at the electrodes low while increasing the power density in the overlapping zone of the paths of current and effecting higher temperatures. When combined with a phase shift between the heating circuits, a spatially variable location of the maximum energy input may be achieved.

In embodiments, the power source is an inverter and each inverter provides a current to its heating circuit whose amplitude is controlled independently of the other heating circuits. The feature of "controlling the amplitude independently of the other heating circuits" means that the various inverters can be operated at different amplitudes, i.e. the amplitude of one inverter does not have a direct effect on the amplitude of the other. It does not exclude that two or more inverters operate at different amplitudes in a predetermined relationship, e.g. controlled by a controller. By setting the amplitude of the current of each individual heating circuit such that desired thermal zones are created within the glass melt, the flow and/or the residence time of the glass melt in the melting vessel can be adjusted. Particularly the minimum residence time of the glass melt can be adjusted.

In embodiments, the power source is a transformer and a fixed shift of a phase angle between the current provided by the transformers to the heating circuits is created by wiring the transformers to a 3-phase power grid. The concept of the overlapping heating circuits of the present disclosure can be used with or without a phase shift between the heating circuits. For implementing a phase shift there are again two options, a transformer-based one and an inverter-based one. In this transformer-based option, the standard power grid frequency of 50/60 Hz is used for operation of the electrodes. The shift in phase angle is achieved by wiring the heating circuits to the transformer using a different tapping. An advantage of the transformer technology is the low loss of energy during the provision of the heating power. However, by tapping the transformer the phase angles are not freely adjustable but only in discrete sequential steps. Furthermore, it is more difficult to adjust the system to achieve that the power grid is loaded completely symmetrically.

In embodiments, the power source is an inverter, signal lines connect the inverters with a common controller, and the common controller acts as a clock generator generating a clock signal for the inverters and controls the shift of the phase angle of the currents provided by them to the heating circuits by independently applying a delay $\Delta t \geq 0\ \mu s$ to each

clock signal. In this inverter-based option of the implementation of the phase shift, the common controller acts as a frequency control unit and is basically a clock generator which provides an external time base for all inverters connected to that common controller. The feature of "independently applying a delay $\Delta t$" means that the various inverters can be operated with different delays applied to the clock signal, i.e., the inverters work with differently timewise modified clock signals resulting in a different phase angle of the supplied current. It does neither exclude that two or more inverters operate with different timewise modified clock signals in a predetermined relationship nor that two or more inverters operate with identically timewise modified clock signals. The common controller can be a part of a distributed control system (DCS). Within the DCS, the amplitudes at at least one electrode of each heating circuit and therefore the power of each inverter is controlled. The amplitudes can also be manipulated individually at each inverter.

In embodiments, the common controller may synchronize its clock signal with an external clock signal. The common controller may synchronize to the external clock signal which is equivalent to a frequency by detecting the zero crossings of the external frequency signal and adjusting its own zero crossings of the clock signal with them. The frequencies may in this case be identical, but they do not have to be identical. In the latter case, the zero crossings of the lower frequency first signal may be matched with the $n^{th}$ zero crossing of the higher frequency second signal wherein n is dependent on the frequency difference. Such an external clock signal synchronization may be advantageous for adapting to the continuously slightly changing power grid frequency of neighboring components in a melting facility which is operated at the power grid frequency of 50/60 Hz.

According to the invention, a spatial distribution of a power density in the vessel may be adjusted by setting the shift in the phase angle of the currents between the first heating circuit and the second heating circuit. This operation principle constitutes a major advantage of the present disclosure. Using the shift in the phase angle of the currents between the heating circuits to establish the desired spatial distribution of the power density allows to create complex thermal profiles in the melting vessel and consequently tailored flow profiles for optimal glass quality. Particularly when combined with the freely adjustable inverter-based phase shift, these profiles are excellently finetunable. But this not only allows the creation of these spatial distributions but also their modification without the need for structural changes at the melting vessel. The melting vessel becomes a fully flexible multi-purpose vessel which can be adapted to various types of glass and operation situations.

In embodiments, setting the shift in the phase angle of the currents may be effected during operation by varying the delay $\Delta t$. For example, if a different batch for a glass type having a different melting temperature is to be fed into the melting vessel, the setup can be adjusted to meet the required flow profile under continued operation. The variation of the delay $\Delta t$ during operation may also be used to counteract deviations from the intended distribution of the power density due to inhomogeneities of the batch resulting in locally different conductivities or defects of single electrodes, transformers, or inverters. Optionally, the delay $\Delta t$ may even be varied as a function of time in order to create a time dependent heating profile.

In embodiments, the shift in phase angle may be set to be 0° - 360°, i.e., the shift is freely adjustable over the whole waveform. In optional embodiments, the shift in the phase angle is 0° or 180°. These two values, corresponding to a non-shifted, i.e., identical waveform, and an inverse waveform, are particularly useful because with them the power density in the overlapping region is either maximally increased or decreased.

Electrotechnically, this system of the present disclosure can be seen as a complex meshed network. Each inverter can initially feed into the glass melt with different power, current, voltage, and phase. Due to a typical resistivity of the glass melt in a range of from $2\,\Omega\cdot cm$ to $200\,\Omega\cdot cm$ at a temperature of $1,600\,°C$, the inverters as sources of power are not independent from each other. A change in a parameter at one inverter may cause a change in all other inverters being part of the same network. All inverters are to be operated with the same frequency in the range of from 20 Hz to 25,000 Hz and to have a fixed phase relative to each other. These two conditions are achieved by a clock generator in a common controller which provides an external time base for all inverters connected to that common controller. Optionally, the clock signal may be, but does not have to be, synchronized with the frequency of the power grid.

The inverter-based system with a common controller may operate in two different modes. In a first mode of operation, where $\Delta t = 0\,\mu s$, all inverters have no phase angle shift relative to each other since all sinusoidal power signals start at a certain point in time t = 0, which is defined by the common controller. In a second mode of operation, where a shift in the phase angle of a certain inverter is desired, a respective delay $\Delta t$ in the clock signal supplied to it will be applied. This can be done individually and independently from each other for all inverters. The delay in the trigger signals may be implemented either centrally directly within the common controller or decentrally by means of separate delay generators installed between the common controller and the respective inverters. With the delay set to zero, the system works like in the first mode of operation.

The option of overlapping heating circuits including a phase shift is fully independent of the current frequency and the choice of power source (transformer-based or inverter-based). In this regard, the inverters might also be operated at power grid frequency while applying the desired delay for the phase shift with the common controller. However, higher frequencies may be advantageous for minimizing secondary defects at the electrodes which may occur at the interface between the electrode surface and the glass melt due to a share of direct current and to maximize the achievable power input into the melt. This suppresses secondary defects such as bubble formation and electrode corrosion, especially in glasses with polyvalent ions.

Regarding the selection of a suitable current frequency, there also are associated drawbacks with either end of the selectable range. While very low current frequencies often cause severe electro corrosion of the electrode material and, by this, cause defects in the produced glass products, very high current frequencies generally cause higher losses of the applied electric energy due to parasitic currents and induction. With the method and melting vessel of this disclosure, while continuously having a high efficiency, the inverter-based electric heating circuits may be operated in a range from about 20 Hz to 25,000 Hz, i.e., from below the standard line frequency up to the medium frequency range, which allows for the selection of the frequency best suited to the posed melting problem.

In embodiments, a current frequency of the alternating current provided by the power sources may be at least 20 Hz and at most 25,000 Hz, optionally at least 50 Hz and at most 25,000 Hz, optionally at least 100 Hz and at most 10,000 Hz or at least 1,000 Hz and at most 5,000 Hz, optionally of at least 1,000 Hz and at most 3,000 Hz.

The current frequency of the alternating current provided by the power sources may be less than 25,000 Hz, less than 10,000 Hz, less than 5,000 Hz, less than 4,500 Hz, less than 4,000 Hz, less than 3,500 Hz, or less than 3,000 Hz. In particular, the current frequency of the alternating current provided by the power sources may be less than 3,000 Hz. The current frequency of the alternating current provided by the power sources may be at least 20 Hz, at least 50 Hz, at least 100 Hz, at least 1,000 Hz, at least 1,500 Hz, at least 2,000 Hz, or at least 2,500 Hz. A lower limit of 100 Hz ascertains that the electrode corrosion is sufficiently low at the required current density and the formation of bubbles is adequately suppressed. An upper limit of 5,000 Hz ascertains that the power loss due to emission and induction remains at an acceptable level.

In embodiments, heating of the glass melt in the melting vessel may be effected by at least 30 % or by at least 50 % or by at least 70 % or by at least 90 % or by 100 % by means of the electrical heating. The disclosed method is particularly suitable for providing a large share of the heating power by means of electricity or even completely dispense with any burners, IR heaters, and the like. This results in a great reduction of the carbon footprint of the produced glass.

Regarding the conductivity of the glass melt, the present method and melting vessel consider some adaptations for achieving an optimal efficiency. The voltage should be adapted according to the conductivity in the melting vessel and the desired power. This can be done with transformers which are specifically adapted to the frequency of the inverters. Furthermore, the phase angle between the current and the voltage has to be corrected. In an ideal case, current and voltage are in phase. This is the case at the point of origin of the power. Due to unwanted complex resistances (capacitances, inductances) along the current path caused by cable coverings, transformer, etc., current and voltage can no longer be in phase. Due to this phase angle shift, part of the generated electrical power is not released in the glass melt (reactive power). The melting vessel of the present disclosure uses a power factor correction in combination with the transformer for compensating this reactive power. These two adaptations may be implemented at any point between the inverter and the melting vessel. In optional embodiments, these adaptations are implemented in close proximity to the electrodes.

In embodiments, the melting vessel may be selected from a melting tank, a fining tank, a conditioning zone, a horizontal flow duct, and a vertical duct. The disclosed method is equally suitable for all of these types of melting vessels. The melting vessel may be any part of a larger melting facility containing a glass melt which may comprise parts such as a melting tank, a refining tank or refining area, or pipes or ducts connecting the same. The ducts may also be made of refractory ceramics. The only prerequisite regarding the melting vessel and its shape and size is that it will allow for the installation of two or more heating circuits, i.e., there has to be enough space for the electrodes of at least two heating circuits within the vessel.

In embodiments, the melting vessel may have a cross-sectional shape of a circle, an oval, or a polygon having 3 to 64 corners. With the ability to adjust the heating circuits independently of each other, it is possible to electrically heat melting vessels which do not have a rectangular or square cross-sectional shape. Hence, the cross-sectional shape may be a circle or oval, which mainly concerns pipes or ducts, or a polygon having 3 to 64 corners, which is particularly of interest for melting tanks and fining tanks. The polygon may optionally have 3, 4, 5, 6, 7, 8, 9, 10, 11, 12, 13, 14, 15, 20, 24, 30, 32, 36, 42, 48, 54, 60, or 64 corners. In certain useful embodiments the polygon has 4, 5, 8, 10, 12, 24, 36, 48, 60, or 64 corners.

In embodiments, the common controller may be configured to apply the delay $\Delta t \geq 0$ $\mu$s to each clock signal internally and/or delay generators may be installed in the signal lines connecting the inverters with the common controller.

The signal lines of the melting vessel may be a direct or indirect connection by wire or wireless technique.

In embodiments, at least one electrode of the at least two electrodes immersible into the glass melt comprised by the first heating circuit may also be comprised by the second heating circuit, and the electrodes of the first and second heating circuits are arranged such that when provided with a current, the path of current through the glass melt between the electrodes of the first heating circuit is identical with the overlapping region with the path of current through the glass melt between the electrodes of the second heating circuit. In other words, the two heating circuits have one electrode in common. Consequently, the number of electrodes in the melting vessel will be one less than in the two heating circuits, for example three instead of four for a setup with two heating circuits with two electrodes, each. The heating circuits are then arranged such that the path of current of first heating circuit lies completely within the path of current of second heating circuit so that the overlapping region is identical with the former.

Particular advantages may be offered by the use of inverter technology with pulse width modulation, which can be used in the entire frequency range from 50 Hz to 10 kHz and beyond, and which offers the great advantage that the power grid phases are loaded evenly so that there will be no unbalanced power grid load. This uniform power grid load is important for the power grid operators and an essential prerequisite for the stable operation of the power grid. For the energy consumer, the even power grid load is a prerequisite for the cost-effective purchase of electrical energy from the power grid operator.

An unbalanced network load may occur when using transformer and thyristor technology and the individual heating circuits are supplied differently with the R, S, T phases. If the single heating circuits have different energy requirements, the phases will consequently be loaded differently. In the classical circuits with transformers used in glass melting tanks, it is very difficult to avoid asymmetrical loading of the power grid phases. Proposed solutions for this issue comprise Scott circuits. In inverter technology, the load on the power grid phases is per se always symmetrical, since here first the alternating current is converted to a direct current, which is then transformed by means of pulse width modulation into the alternating current for heating with a specified frequency and phase. One thus gains many degrees of freedom in the circuitry without having to accept the disadvantage of asymmetrical power grid loading.

Short description of the Figures

Figure 1     is an electric scheme of a glass melting vessel with a single heating circuit using one pair of electrodes.

Figure 2     is an electric scheme of a glass melting vessel with three heating circuits each using one pair of electrodes and a decentralized phase shift.

Figure 3     is a top view scheme of a glass melting vessel of an embodiment with two transversal heating circuits.

Figure 4     is a scheme of the power density in the glass melting vessel of Figure 3 in different operation modes.

Figure 5     is a scheme of the temperature in the glass melting vessel of Figure 3 in different operation modes.

Figure 6     is a top view scheme of a glass melting vessel of an embodiment with two transversal and two longitudinal heating circuits.

Figure 7     is a top view scheme of a glass melting vessel of an embodiment with six heating circuits including different phase shifts.

Figure 8     is a top view scheme of a glass melting vessel of an embodiment with two transversal heating circuits sharing a row of electrodes.

Description of the Figures

Hereinafter, the present disclosure will be exemplified with examples using a small number of heating circuits with rows of rod-shaped electrodes extending from the bottom of a rectangular melting vessel into the melt. This is only done for the purpose of easier overview. It is to be understood that the inventive concept of this disclosure is not limited to those simple examples but may also be applied to different shaped melting vessels using far more heating circuits and a different arrangement of their electrodes. This flexibility is exactly one of its huge advantages.

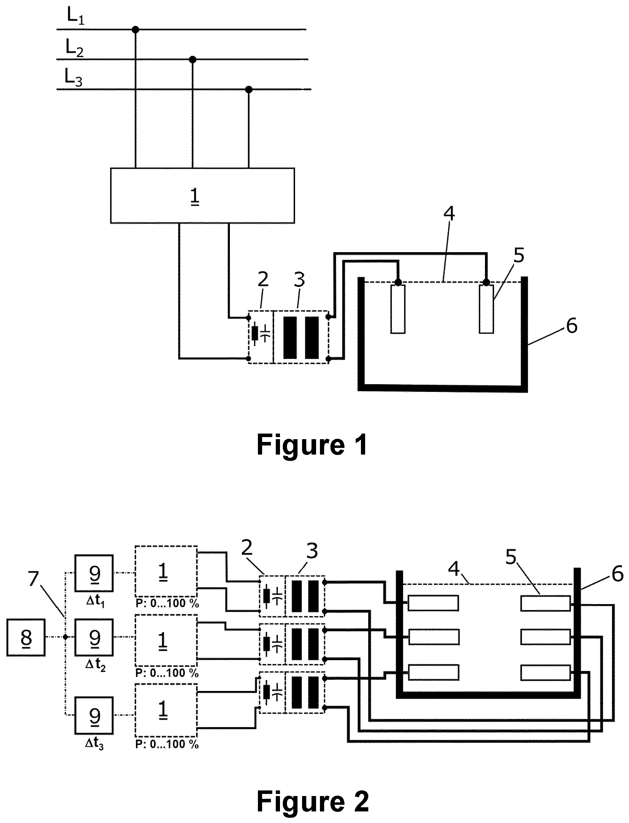

**Figure 1** shows a scheme of an exemplary glass melting vessel with a single heating circuit using one pair of electrodes. The purpose of this figure is to exemplify the constituents of a heating circuit as used within this application.

The upper left corner of the figure indicates the three conductors ($L_1, L_2, L_3$) of a three-phase power line provided from the power grid. These are connected to an inverter (1) which converts the power grid frequency of 50/60 Hz to a medium range frequency of from 20 Hz to 25,000 Hz. The inverter (1) is connected via the power factor correction (2) for prevention of harmonic currents to the transformer (3). In the melting vessel (6), a pair of electrodes (5) is arranged below the surface (4) of the glass melt such that the electrodes (5) coming from above are fully immersed in the glass melt.

**Figure 2** depicts an electrical scheme of a glass melting vessel with three heating circuits each using one pair of electrodes. For better overview, the three conductors ($L_1, L_2, L_3$) providing power to the inverters (1) are not shown in this figure. The layout of the single heating circuits is identical to the one shown in Figure 1. The three electrode (5) pairs are in this example arranged horizontally extending from the walls of the melting vessel (6) and at different heights in the glass melt. Hence, the paths of current between the electrodes (5) of the heating circuits will not overlap. The three inverters (1) are connected by means of the signal lines (7) with the common controller (8).

This example is only meant to demonstrate a setup according to this disclosure for an inverter-based power source and how the phase shift can be established with it, i.e., essentially the part of the heating circuits outside the melting vessel (6). Hence, the electrode (5) arrangement is shown here like in prior art for better overview. The electrode (5) arrangements according to the disclosure will be shown in the following figures where the part of the heating circuits outside the melting vessel (6) is only indicated by an arrow instead for better overview.

The common controller (8) is responsible for the coordination of the inverters (1). It creates a clock signal for synchronizing the connected inverters (1) which each provide a current and control its amplitude. This allows to set specific heating profiles for the single heating circuits independently from each other for the purpose of shaping the flow of the glass melt within the melting vessel (6). The optimized flow will be able to minimize or avoid dead zones and ascertain a homogeneously mixed glass melt which will in turn improve the glass quality. Also, the fining process can be improved by increasing the temperature in certain areas to decrease the viscosity of the melt for facilitating the surfacing of the bubbles.

Further, the common controller (8) can apply an individual delay $\Delta t_1$, $\Delta t_2$, and $\Delta t_3$ to the trigger signals of the clock generator for the three inverters (1) of the three heating circuits by means of the three delay generators (9) which are installed in the signal lines (7) between the common controller (8) and the inverters (1). By applying a $\Delta t \neq 0$ µs, the phase angle of the current provided by the respective inverter (1) can be shifted. This is an example of a decentralized implementation of the delay. In a centralized variant, the common controller (8) may internally apply the respective delays to the clock signal. The inverters (1) can independently vary the power output from 0 % to 100 %.

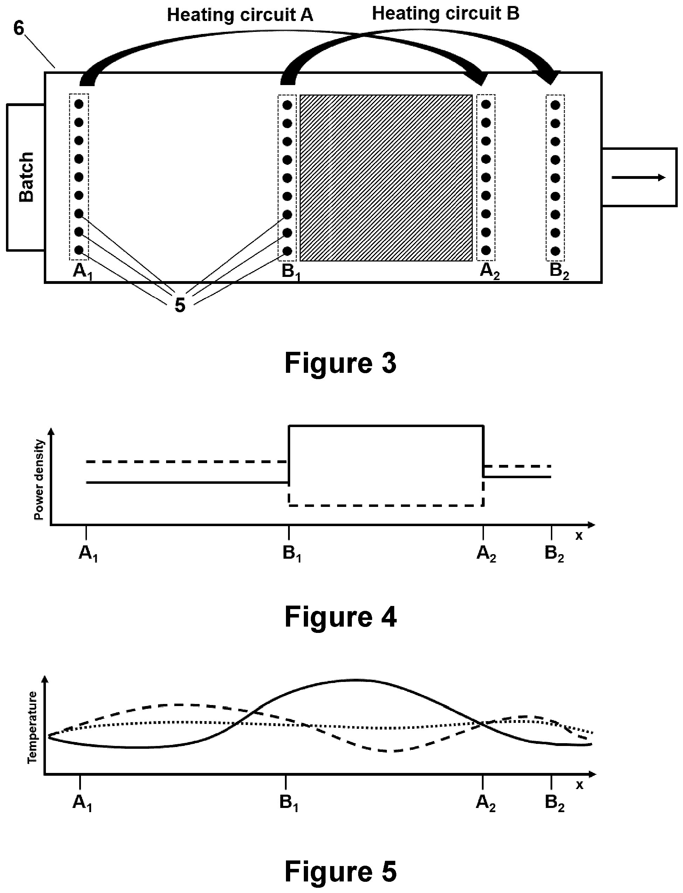

**Figure 3** is a top view scheme of a glass melting vessel (6) of an embodiment with two transversal heating circuits wherein the term "transversal" is referring to a perpendicular orientation of the rows of electrodes (5) relative to the melting vessel (6) and the direction of flow of the melt therein. The path of current between the rows of electrodes (5) will consequently be parallel to the direction of flow of the melt. The glass melting vessel (6) is schematically shown with a batch input zone to the left of the figure and an outlet for the glass melt to the right of the figure. Hence, the melt will flow from left to right in the figure. The glass melting vessel (6) is equipped with two heating circuits A and B, each comprising two rows ($A_1$, $A_2$, and $B_1$, $B_2$) of nine rod-shaped electrodes (5) extending from the bottom of the melting vessel (6) into the melt. The components external to the melting vessel (6) belonging to the heating circuits A and B, i.e., the conductors, the inverters, the power factor correction, and the transformers, are not shown for better overview but only indicated by the arrows. The distance between electrode rows $A_1$ and $A_2$ of heating circuit A is in this example larger than that between electrode rows $B_1$ and $B_2$ of heating circuit B. The overlapping region of the path of current between the electrodes (5) of the two heating circuits A and B is the area between rows $B_1$ and $A_2$, which is indicated by the crosshatched area in the figure. In prior art, the electrodes (5) of row $A_1$ would be connected to row $B_1$ and row $A_2$ would be connected to the row $B_2$ to form two consecutive heating circuits whose paths of current do not overlap.

**Figure 4** is a scheme of the power density in the glass melting vessel (6) of Figure 3 in different operation modes. In the diagram, there is printed the power density over the length x of the melting vessel (6). **Figure 5** is the corresponding scheme of the temperature in the glass melting vessel (6) of Figure 3. Again, the temperature is printed over the length of the melting vessel (6). In both figures, the positions of the rows of electrodes (5) in Figure 3 is indicated on the x-axes.

The solid line shows the situation in an operation mode without a phase shift. As the currents in the two heating circuits are in phase, there will be no potential difference between the rows of electrodes (5) $A_1$ and $B_1$. Hence, the current will flow only within the heating circuits between rows $A_1$ - $A_2$ and $B_1$ - $B_2$. In the overlapping region of the path of current between rows $B_1$ and $A_2$, the power density of both heating circuits add up and as a result the temperature is increased more. Outside the overlapping region, only the effect of the respective single heating circuit occurs. Such an embodiment may for example be useful for specialty glasses with high demands on the glass quality where additional electric energy is input into a melting vessel with burners. With this setting, the temperature in the melting zone between rows $A_1$ and $B_1$ is increased as well as the fining zone between rows $B_1$ and $A_2$ is particularly boosted in temperature. Such a temperature profile is often preferred for the classic redox fining agents where the batch is melted in the melting zone at moderate temperatures and the melt is then brought to high temperatures in the fining zone for setting free the fining agent. Here in the overlapping region between rows $B_1$ and $A_2$, fining gases are chemically set free which initiate an increase in the bubble size in the raw melt and accelerate their rise to the surface of the melt.

The other extreme of the operation mode is a phase shift of 180° which is shown with the dashed line in Figures 4 and 5. A phase shift of 180° results in an inverse waveform of the current. Hence, the current will flow between the rows of electrodes (5) of different heating circuits, i.e., between rows $A_1$ - $B_1$ and $A_2$ - $B_2$. As can be seen in Figure 4, in the overlapping region will be no power density while it is increased in the adjacent regions. The temperature profile in this mode corresponds to a very high melting zone temperature followed by a drop in temperature in the fining zone and again a final slight increase in temperature. Such temperature profiles are particularly advantageous for glass types comprising components requiring very high melting temperatures when used with evaporation fining agents.

By adjusting the phase shift between the heating circuits, any desired intermediate between these two extrema can be obtained for optimizing the temperature profiles and residence times for different glass types and fining mechanisms. There is no need for any constructional work on the melting vessel for this. An example of such an intermediate shift between 0° and 180° is shown in Figure 5 with the dotted line. With the suitable setting, an almost constant temperature profile can be achieved within the melting vessel. This is an effective means for calming the flow of the melt for avoiding short circuit flows and thereby increasing the minimum residence time of the melt. When using high shares of electric energy for heating or even heating fully electrically, it gets with increasing share of electricity continuously more difficult to calm the flow of the melt and to establish a slow and even flow such as a plug flow profile. Here, the phase shifting is a valuable means for countering this issue.

A further advantage of the disclosed overlapping heating circuits is a reduced current density as compared with prior art non-overlapping heating circuits. The inventors have found that the current density can be influenced with the phase shift. To investigate this phenomenon, a model setup like in Figure 3 but using only a single electrode per row has been measured. It has surprisingly been found that while using the same power P at a phase shift of about 120° a minimum of the current density $j_{max}$ occurs.

| Phase shift | P [W] | jmax [A/cm$^2$] | relative difference |
|---|---|---|---|
| 0° | 3,524 | 0.175 | 100 % |
| 90° | 3,524 | 0.139 | 79% |
| 120° | 3,524 | 0.122 | 70 % |
| 180° | 3,524 | 0.186 | 106 % |

This means that if secondary faults occur at the electrodes due to excessive current densities, the phase shift can be used to minimize them and thus influence the fault formation. Of course, the spatial distribution of the power release is also influenced at the same time as the phase shift. The power must therefore be readjusted accordingly so that the total power in the process is sufficient. During operation of a melting vessel according to this disclosure, the parameter of the phase shift can be used to set specifically for each type of glass an optimum of the total power release of the heating circuits for the quality of the glass product. Hence, a maximized use of electric energy for heating of the glass melt is possible which reduces the use of fossil energy and the carbon footprint.

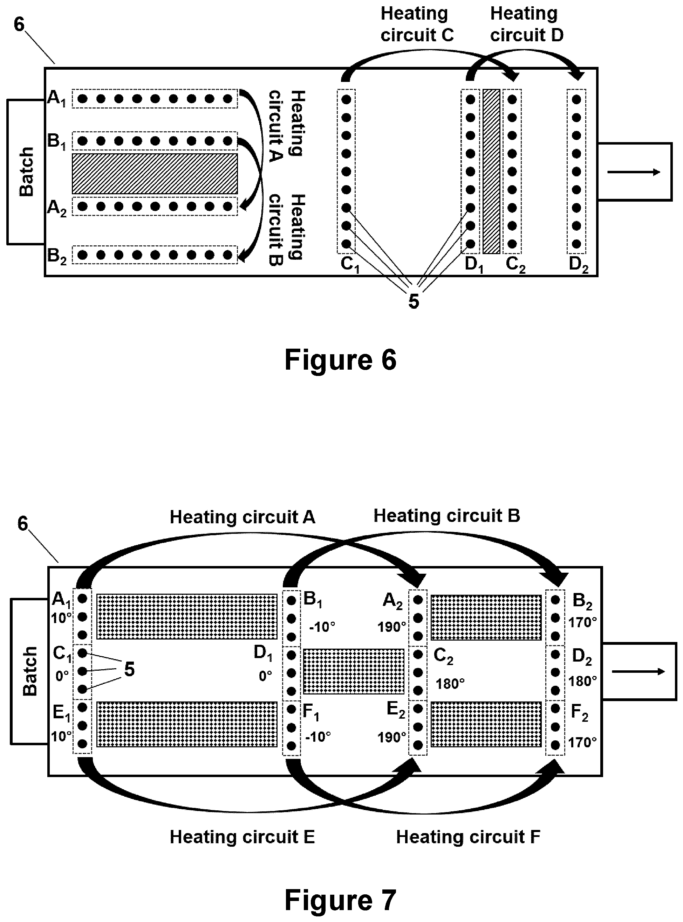

**Figure 6** is a top view scheme of a glass melting vessel (6) of an embodiment with two transversal and two longitudinal heating circuits. In the first half of the melting vessel (6), there are installed two longitudinal heating circuits A and B which are overlapping in the first overlapping region indicated by the first crosshatched area in the figure between the rows of electrodes (5) $B_1$ and $A_2$. It is essentially the arrangement of the heating circuits A and B of melting vessel (6) in Figure 3 rotated by 90° and with a slightly different spacing between the rows. Hence, the effects achievable will also be the same.

The second half of the melting vessel (6) is equipped with an electrode (5) setup like the melting vessel (6) in Figure 3. Again, there are two transversal heating circuits C and D, each comprising two rows ($C_1$, $C_2$, and $D_1$, $D_2$) of nine rod-shaped electrodes (5) extending from the bottom of the melting vessel (6) into the melt. The second overlapping region of the path of current between the electrodes (5) of the two heating circuits C and D is the area between rows $D_1$ and $C_2$, which is indicated by the second crosshatched area in the figure.

In this example, with the two longitudinal heating circuits A and B, hot or cold temperature zones in the direction of flow of the melt can be created. This can be used to establish crossflow vortices in the melt which help to optimize the melting process of the batch by homogenizing the melt and preventing accumulations of the batch in the wall area. This may be particularly advantageous for glass types comprising components with very high melting temperatures or being prone to the formation of melting relicts, such as alumosilicate glasses. Further, by adjusting the phase shift correspondingly, cold zones at the walls of the melting vessel can be created such that despite an increased energy input into the melt, the refractory material of the walls will not be corroded more by the hotter melt. This will allow to circumvent the limitation of the electric energy input as a consequence of corrosion of the walls due to too hot glass contact temperatures.

The two transversal heating circuits C and D have only a relatively small overlapping region which will cause a high input of energy into a small area of the melt creating a concentrated hot zone when the phase shift is zero or only small. This hot zone will cause an upward flow of the melt forming a barrier for the melt near the outlet at the end of the melting zone. Such a barrier may help to prevent short-circuit flows from exiting directly through the outlet. Furthermore, it can very effectively be used with glasses that segregate during melting and form light layered glass, which is retained here.

In a modification of this embodiment, the longitudinal and transversal heating circuits may be arranged at swapped positions, i.e., in the first half of the melting vessel (6), there may be installed the electrode (5) setup with two transversal heating circuits like in the melting vessel (6) in Figure 3 and in the second half the two longitudinal heating circuits.

**Figure 7** is a top view scheme of a glass melting vessel (6) of an embodiment with six heating circuits including different phase shifts. It is a variation of the example of Figure 3 which demonstrates that highly complex heating profiles can be established by the disclosed method. While the positioning of the rows of electrodes (5) is almost the same as in Figure 3, from the nine electrodes (5) of each row of the two heating circuits A and B groups of three are supplied with a different phase shift. Hence, the example of Figure 7 uses six heating circuits (A, B, C, D, E, and F) and applies different phase shifts to them. In the figure, the arrows for heating circuits C and D have been omitted of better overview. Only the denominations of their rows of electrodes (5) $C_1$, $C_2$, $D_1$, and $D_2$ have been showed and the respective phase angles at the electrode (5) groups are annotated in the figure below them. These phase angles are equivalent to a phase shift of 10° between the neighboring heating circuits. The overlapping regions of the path of current between the electrodes (5) of the six heating circuits are essentially the same as in Figure 3. As can be seen in the figure, a chessboard-like heating pattern can be established with these phase shifts having hot zones between rows $A_1$ and $B_1$, $A_2$ and $B_2$, $D_1$ and $C_2$, $E_1$ and $F_1$, and $E_2$ and $F_2$, which are indicated by the checkered areas in the figure.

This demonstrates that the disclosed method allows for a highly flexible creation of thermal profiles which may be highly complex and can be altered just by changing the supplied phase shift. The latter is particularly evident when considering that the example of Figure 7 can be turned into the example of Figure 3 simply by setting the phase shift in the rows to the same value, i.e., heating circuits A, C, and E and heating circuits B, D, and F will then together act like heating circuits A and B of Figure 3.

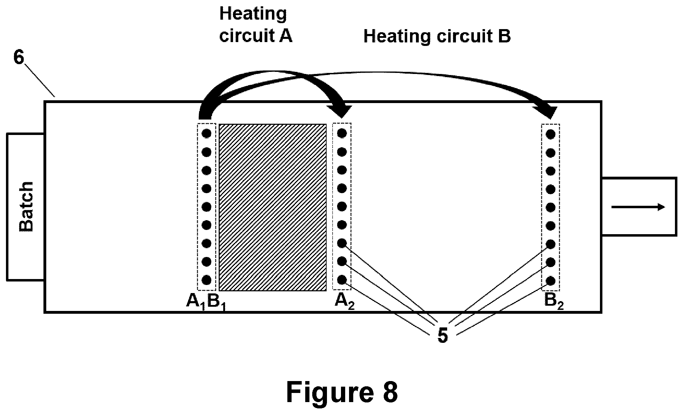

**Figure 8** is a top view scheme of a glass melting vessel (6) of an embodiment with two transversal heating circuits like in Figure 3 but sharing a row of electrodes (5). While each of the heating circuits A and B still comprises two rows of electrodes (5), the glass melting vessel (6) comprises in total only three rows of electrodes (5) because one row is connected to both heating circuits A and B. The row of electrodes (5) to the left of the figure which is labeled $A_1 B_1$ is the first row of electrodes (5) for both heating circuits A and B and is connected to the respective second row of electrodes (5) $A_2$ and $B_2$. The overlapping region of the path of current between the electrodes (5) of the two heating circuits A and B, which is again indicated by the crosshatched area in the figure, is in this embodiment the area between rows $A_1 B_1$ and $A_2$ because the path of current of heating circuit A lies completely within the path of current of heating circuit B.

This embodiment is a special case of a colinear overlap of the paths of current where only one of them extends beyond the overlapping region, i.e., the partial overlap applies only for one of the heating circuits while the other one fully overlaps. Such an embodiment will allow for the same flexible options for varying the power input into the glass melt by means of the applied phase shift as the other embodiments but of course will not have the advantage of the reduced current density at the common row of electrodes (5) in consequence of the current of both heating circuits flowing through it. Hence, such an embodiment is particularly useful in cases where current density at a single row of electrodes (5) is less of a concern but flexibility and keeping the number of electrodes (5) low for reasons of limited space available or further reduction of the energy drain by electrode cooling. Moreover, such a wiring scheme may also be used as part of a complex design similar to the one outlined in Figure 7. If the phase shifts are suitably chosen a further variable zone of energy input can be established by installing just one further row of electrodes (5).

Reference numerals

**1**    inverter

**2**    power factor correction

**3**    transformer

**4**    surface of the glass melt

**5**    electrode

**6**    melting vessel

**7**    signal line

**8**    controller

**9**    delay generator

**A, B, C, D, E, F**     heating circuits

**A$_1$, A$_2$, B$_1$, B$_2$, C$_1$, C$_2$, D$_1$, D$_2$, E$_1$, E$_2$, F$_1$, F$_2$**   rows of electrodes

**L$_1$, L$_2$, L$_3$**    conductors of a 3-phase power line

**Claims**

1. A method for electrically heating a glass melt in a melting vessel (6) comprising at least a first heating circuit and a second heating circuit, each heating circuit comprising a power source and at least two electrodes (5) immersible into the glass melt, by providing an alternating current from the power sources to the electrodes (5) wherein

   - the electrodes (5) of the heating circuits are arranged such that a path of current through the glass melt between the electrodes (5) of the first heating circuit and a path of current through the glass melt between the electrodes (5) of the second heating circuit are partially geometrically overlapping in an overlapping region; and
   - a spatial distribution of a power density in the vessel is adjusted by setting the shift in the phase angle of the currents between the first heating circuit and the second heating circuit.

2. The method for electrically heating a glass melt according to claim 1, wherein the path of current through the glass melt between the electrodes (5) of the first heating circuit and the path of current through the glass melt between the electrodes (5) of the second heating circuit are in the overlapping region collinear or intersect.

3. The method for electrically heating a glass melt according to claim 1 or 2, wherein the power source is a transformer (3) or an inverter (1) electrically connected via a power factor correction (2) to a transformer (3).

4. The method for electrically heating a glass melt according to claim 3, wherein the power source is an inverter (1) and each inverter (1) provides a current to its heating circuit whose amplitude is controlled independently of the other heating circuits.

5. The method for electrically heating a glass melt according to claim 3, wherein the power source is a transformer (3) and a fixed shift of a phase angle between the current provided by the transformers (3) to the heating circuits is created by wiring the transformers (3) to a 3-phase power grid.

6. The method for electrically heating a glass melt according to claim 3 or 4, wherein the power source is an inverter (1), signal lines (7) connect the inverters (1) with a common controller (8), and the common controller (8) acts as a clock generator generating a clock signal for the inverters (1) and controls the shift of the phase angle of the currents provided by them to the heating circuits by independently applying a delay $\Delta t \geq 0$ μs to each clock signal.

7. The method for electrically heating a glass melt according to at least one of the preceding claims, wherein setting the shift in the phase angle of the currents is effected during operation by varying the delay $\Delta t$.

8. The method for electrically heating a glass melt according to claim 6 or 7, wherein the shift in the phase angle is 0° or 180°.

9. The method for electrically heating a glass melt according to at least one of the preceding claims, wherein heating of the glass melt in the melting vessel (6) is effected by at least 30 % or by at least 50 % or by at least 70 % or by at least 90 % or by 100 % by means of the electrical heating.

10. The method for electrically heating a glass melt according to at least one of the preceding claims, wherein a current frequency of the alternating current provided by the power sources is at least 20 Hz and at most 25,000 Hz, optionally at least 50 Hz and at most 25,000 Hz, optionally at least 100 Hz and at most 10,000 Hz or at least 1,000 Hz and at most 5,000 Hz.

11. A melting vessel (6) for electrically heating a glass melt comprising at least a first heating circuit and a second heating circuit, each heating circuit comprising a power source and at least two electrodes (5) immersible into the glass melt, wherein

    - the electrodes (5) of the heating circuits are arranged such that when provided with a current, a path of current through the glass melt between the electrodes (5) of the first heating circuit and a path of current through the glass melt between the electrodes (5) of the second heating circuit are partially geometrically overlapping in an overlapping region; and
- the power source is an inverter (1) electrically connected via a power factor correction (2) to a transformer (3).

12. The melting vessel (6) for electrically heating a glass melt according to claim 11, wherein the path of current through the glass melt between the electrodes (5) of the first heating circuit and the path of current through the glass melt between the electrodes (5) of the second heating circuit are in the overlapping region collinear or intersect.

13. The melting vessel (6) for electrically heating a glass melt according to claim 11 or 12, wherein each inverter (1) provides a current to its heating circuit whose amplitude is controlled independently of the other heating circuits.

14. The melting vessel (6) for electrically heating a glass melt according to at least one of claims 11 to 13, wherein signal lines (7) connect the inverters (1) with a common controller (8) and the common controller (8) acts as a clock generator generating a clock signal for the inverters (1) and controls the shift of the phase angle of the current provided by them to the heating circuits by independently applying a delay $\Delta t \geq 0$ µs to each clock signal.

15. The melting vessel (6) for electrically heating a glass melt according to at least one of claims 11 to 14, wherein the inverter (1) is set to provide a current frequency of at least 20 Hz and at most 25,000 Hz, optionally of at least 50 Hz and at most 25,000 Hz, optionally of at least 100 Hz and at most 10,000 Hz or of at least 1,000 Hz and at most 5,000 Hz.

16. The melting vessel (6) for electrically heating a glass melt according to at least one of claims 11 to 15, wherein the melting vessel (6)

   - is selected from a melting tank, a fining tank, a conditioning zone, a horizontal flow duct, and a vertical duct; and/or
   - has a cross-sectional shape of a circle, an oval, or a polygon having 3 to 64 corners.

17. The melting vessel (6) for electrically heating a glass melt according to at least one of claims 14 to 16, wherein the common controller (8) is configured to apply the delay $\Delta t \geq 0$ µs to each clock signal internally and/or delay generators (9) are installed in the signal lines (7) connecting the inverters (1) with the common controller (8).

18. The melting vessel (6) for electrically heating a glass melt according to at least one of claims 11 to 17, wherein

   - at least one electrode (5) of the at least two electrodes (5) immersible into the glass melt comprised by the first heating circuit is also comprised by the second heating circuit, and
   - the electrodes (5) of the first and second heating circuits are arranged such that when provided with a current, the path of current through the glass melt between the electrodes (5) of the first heating circuit is identical with the overlapping region with the path of current through the glass melt between the electrodes (5) of the second heating circuit.


**Patentansprüche**

1. Verfahren zum elektrischen Erwärmen einer Glasschmelze in einem Schmelzgefäß (6), das mindestens einen ersten Heizkreis und einen zweiten Heizkreis aufweist, wobei jeder Heizkreis eine Stromquelle und mindestens zwei in die Glasschmelze eintauchbare Elektroden (5) aufweist, durch Zuführen eines Wechselstroms von den Stromquellen zu den Elektroden (5), wobei

   die Elektroden (5) der Heizkreise derart angeordnet sind, dass sich ein Strompfad durch die Glasschmelze zwischen den Elektroden (5) des ersten Heizkreises und ein Strompfad durch die Glasschmelze zwischen den Elektroden (5) des zweiten Heizkreises in einem Überlappungsbereich teilweise geometrisch überlappen, und eine räumliche Verteilung einer Leistungsdichte im Gefäß durch Einstellen der Verschiebung des Phasenwinkels der Ströme zwischen dem ersten Heizkreis und dem zweiten Heizkreis eingestellt wird.

2. Verfahren zum elektrischen Erwärmen einer Glasschmelze nach Anspruch 1, wobei der Strompfad durch die Glasschmelze zwischen den Elektroden (5) des ersten Heizkreises und der Strompfad durch die Glasschmelze zwischen den Elektroden (5) des zweiten Heizkreises im Überlappungsbereich kollinear sind oder sich schneiden.

3. Verfahren zum elektrischen Erwärmen einer Glasschmelze nach Anspruch 1 oder 2, wobei die Stromquelle ein Transformator (3) oder ein über eine Blindleistungskompensation (2) mit einem Transformator (3) elektrisch verbundener Wechselrichter (1) ist.

4. Verfahren zum elektrischen Erwärmen einer Glasschmelze nach Anspruch 3, wobei die Stromquelle ein Wechselrichter (1) ist und jeder Wechselrichter (1) seinem Heizkreis einen Strom zuführt, dessen Amplitude unabhängig von den anderen Heizkreisen gesteuert wird.

5. Verfahren zum elektrischen Erwärmen einer Glasschmelze nach Anspruch 3, wobei die Stromquelle ein Transformator (3) ist und eine feste Verschiebung eines Phasenwinkels zwischen dem durch die Transformatoren (3) den Heizkreisen zugeführten Strom durch eine Verdrahtung der Transformatoren (3) zu einem 3-Phasen-Stromnetz erzeugt wird.

6. Verfahren zum elektrischen Erwärmen einer Glasschmelze nach Anspruch 3 oder 4, wobei die Stromquelle ein Wechselrichter (1) ist, Signalleitungen (7) die Wechselrichter (1) mit einer gemeinsamen Steuereinheit (8) verbinden und die gemeinsame Steuereinheit (8) als ein Taktgenerator fungiert, der ein Taktsignal für die Wechselrichter (1) erzeugt und die Verschiebung des Phasenwinkels der durch sie den Heizkreisen zugeführten Ströme durch unabhängiges Anwenden einer Verzögerung $\Delta t \geq 0$ µs auf jedes Taktsignal steuert.

7. Verfahren zum elektrischen Erwärmen einer Glasschmelze nach mindestens einem der vorhergehenden Ansprüche, wobei das Einstellen der Verschiebung des Phasenwinkels der Ströme während des Betriebs durch Variieren der Verzögerung $\Delta t$ erfolgt.

8. Verfahren zum elektrischen Erwärmen einer Glasschmelze nach Anspruch 6 oder 7, wobei die Verschiebung des Phasenwinkels 0° oder 180° beträgt.

9. Verfahren zum elektrischen Erwärmen einer Glasschmelze nach mindestens einem der vorhergehenden Ansprüche, wobei das Erwärmen der Glasschmelze im Schmelzgefäß (6) zu mindestens 30% oder zu mindestens 50% oder zu mindestens 70% oder zu mindestens 90% oder zu 100% mittels der elektrischen Erwärmung erfolgt.

10. Verfahren zum elektrischen Erwärmen einer Glasschmelze nach mindestens einem der vorhergehenden Ansprüche, wobei eine Stromfrequenz des durch die Stromquellen bereitgestellten Wechselstroms mindestens 20 Hz und höchstens 25000 Hz, optional mindestens 50 Hz und höchstens 25000 Hz, optional mindestens 100 Hz und höchstens 10000 Hz oder mindestens 1000 Hz und höchstens 5000 Hz beträgt.

11. Schmelzgefäß (6) zum elektrischen Erwärmen einer Glasschmelze, aufweisend mindestens einen ersten Heizkreis und einen zweiten Heizkreis, wobei jeder Heizkreis eine Stromquelle und mindestens zwei in die Glasschmelze eintauchbare Elektroden (5) aufweist, wobei

die Elektroden (5) der Heizkreise derart angeordnet sind, dass bei Stromzufuhr ein Strompfad durch die Glasschmelze zwischen den Elektroden (5) des ersten Heizkreises und ein Strompfad durch die Glasschmelze zwischen den Elektroden (5) des zweiten Heizkreises sich in einem Überlappungsbereich teilweise geometrisch überlappen, und
die Stromquelle ein Wechselrichter (1) ist, der über eine Leistungsfaktorkorrektur (2) mit einem Transformator (3) elektrisch verbunden ist.

12. Schmelzgefäß (6) zum elektrischen Erwärmen einer Glasschmelze nach Anspruch 11, wobei der Strompfad durch die Glasschmelze zwischen den Elektroden (5) des ersten Heizkreises und der Strompfad durch die Glasschmelze zwischen den Elektroden (5) des zweiten Heizkreises im Überlappungsbereich kollinear sind oder sich schneiden.

13. Schmelzgefäß (6) zum elektrischen Erwärmen einer Glasschmelze nach Anspruch 11 oder 12, wobei jeder Wechselrichter (1) seinem Heizkreis einen Strom zuführt, dessen Amplitude unabhängig von den anderen Heizkreisen gesteuert wird.

14. Schmelzgefäß (6) zum elektrischen Erwärmen einer Glasschmelze nach mindestens einem der Ansprüche 11 bis 13, wobei Signalleitungen (7) die Wechselrichter (1) mit einer gemeinsamen Steuereinheit (8) verbinden und die gemeinsame Steuereinheit (8) als ein Taktgenerator fungiert, der ein Taktsignal für die Wechselrichter (1) erzeugt und die Verschiebung des Phasenwinkels des durch sie den Heizkreisen zugeführten Stroms durch unabhängiges Anwenden einer Verzögerung von $\Delta t \geq 0$ μs auf das Taktsignal steuert.

15. Schmelzgefäß (6) zum elektrischen Erwärmen einer Glasschmelze nach mindestens einem der Ansprüche 11 bis 14, wobei der Wechselrichter (1) derart eingestellt ist, dass er eine Stromfrequenz von mindestens 20 Hz und höchstens 25000 Hz, optional von mindestens 50 Hz und höchstens 25000 Hz, optional von mindestens 100 Hz und höchstens 10000 Hz oder von mindestens 1000 Hz und höchstens 5000 Hz, bereitstellt.

16. Schmelzgefäß (6) zum elektrischen Erwärmen einer Glasschmelze nach mindestens einem der Ansprüche 11 bis 15, wobei das Schmelzgefäß (6)

ausgewählt ist aus einem Schmelztank, einem Läuterbehälter, einer Konditionierungszone, einem Horizontalströmungskanal und einem Vertikalkanal, und/oder
eine Querschnittsform eines Kreises, eines Ovals oder eines Polygons mit 3 bis 64 Ecken aufweist.

17. Schmelzgefäß (6) zum elektrischen Erwärmen einer Glasschmelze nach mindestens einem der Ansprüche 14 bis 16, wobei die gemeinsame Steuereinheit (8) dafür konfiguriert ist, die Verzögerung $\Delta t \geq 0$ μs auf jedes Taktsignal intern anzuwenden und/oder Verzögerungsgeneratoren (9) in den Signalleitungen (7) installiert sind, die die Wechselrichter (1) mit der gemeinsamen Steuereinheit (8) verbinden.

18. Schmelzgefäß (6) zum elektrischen Erwärmen einer Glasschmelze nach mindestens einem der Ansprüche 11 bis 17, wobei

mindestens eine Elektrode (5) der mindestens zwei in die Glasschmelze eintauchbaren Elektroden (5), die dem ersten Heizkreis zugehörig sind, auch dem zweiten Heizkreis zugehörig sind, und
die Elektroden (5) des ersten und des zweiten Heizkreises derart angeordnet sind, dass, wenn ihnen ein Strom zugeführt wird, der Strompfad durch die Glasschmelze zwischen den Elektroden (5) des ersten Heizkreises identisch ist mit dem Überlappungsbereich mit dem Strompfad durch die Glasschmelze zwischen den Elektroden (5) des zweiten Heizkreises.

**Revendications**

1. Procédé pour chauffer électriquement un verre fondu dans un récipient de fusion (6) comprenant au moins un premier circuit de chauffage et un deuxième circuit de chauffage, chaque circuit de chauffage comprenant une source d'alimentation et au moins deux électrodes (5) pouvant être immergées dans le verre fondu, en fournissant un courant alternatif provenant des sources d'alimentation aux électrodes (5), dans lequel

- les électrodes (5) des circuits de chauffage sont disposées de telle sorte qu'un trajet de courant à travers le verre fondu entre les électrodes (5) du premier circuit de chauffage et qu'un trajet de courant à travers le verre fondu entre les électrodes (5) du deuxième circuit de chauffage se chevauchent partiellement sur le plan géométrique dans une zone de chevauchement ; et
- une distribution spatiale d'une densité de puissance dans le récipient est ajustée en réglant le décalage des angles de phase des courants entre le premier circuit de chauffage et le deuxième circuit de chauffage.

2. Procédé pour chauffer électriquement un verre fondu selon la revendication 1, dans lequel le trajet de courant à travers le verre fondu entre les électrodes (5) du premier circuit de chauffage et le trajet de courant à travers le verre fondu entre les électrodes (5) du deuxième circuit de chauffage sont colinéaires ou se croisent dans la zone de chevauchement.

3. Procédé pour chauffer électriquement un verre fondu selon la revendication 1 ou 2, dans lequel la source d'alimentation est un transformateur (3) ou un onduleur (1) connecté électriquement à un transformateur (3) via un correcteur de facteur de puissance (2).

4. Procédé pour chauffer électriquement un verre fondu selon la revendication 3, dans lequel la source d'alimentation est un onduleur (1) et chaque onduleur (1) fournit à son circuit de chauffage un courant dont l'amplitude est commandée indépendamment des autres circuits de chauffage.

5. Procédé pour chauffer électriquement un verre fondu selon la revendication 3, dans lequel la source d'alimentation est un transformateur (3) et un décalage fixe d'un angle de phase entre le courant fourni par les transformateurs (3) aux circuits de chauffage est créé en raccordant les transformateurs (3) à un réseau électrique triphasé.

6. Procédé pour chauffer électriquement un verre fondu selon la revendication 3 ou 4, dans lequel la source d'alimentation est un onduleur (1), des lignes de signal (7) relient les onduleurs (1) à un contrôleur commun (8), et le contrôleur commun (8) agit comme un générateur d'horloge générant un signal d'horloge pour les onduleurs (1) et contrôle le décalage de l'angle de phase des courants fournis par ceux-ci aux circuits de chauffage en appliquant indépendamment un retard $\Delta t \geq 0$ $\mu$s à chaque signal d'horloge.

7. Procédé pour chauffer électriquement un verre fondu selon au moins l'une des revendications précédentes, dans lequel le réglage du décalage de l'angle de phase des courants est effectué pendant le fonctionnement en faisant varier le retard $\Delta t$.

8. Procédé pour chauffer électriquement un verre fondu selon la revendication 6 ou 7, dans lequel le décalage de l'angle de phase est de 0° ou 180°.

9. Procédé pour chauffer électriquement un verre fondu selon au moins l'une des revendications précédentes, dans lequel le chauffage du verre fondu dans le récipient de fusion (6) est effectué à au moins 30 %, à au moins 50 %, à au moins 70 %, à au moins 90 % ou à 100 % au moyen du chauffage électrique.

10. Procédé pour chauffer électriquement un verre fondu selon au moins l'une des revendications précédentes, dans lequel une fréquence de courant du courant alternatif fourni par les sources d'alimentation est d'au moins 20 Hz et d'au plus 25 000 Hz, éventuellement d'au moins 50 Hz et d'au plus 25 000 Hz, éventuellement d'au moins 100 Hz et d'au plus 10 000 Hz ou d'au moins 1 000 Hz et d'au plus 5 000 Hz.

11. Récipient de fusion (6) pour chauffer électriquement un verre fondu, comprenant au moins un premier circuit de chauffage et un deuxième circuit de chauffage, chaque circuit de chauffage comprenant une source d'alimentation et au moins deux électrodes (5) pouvant être immergées dans le verre fondu, dans lequel

- les électrodes (5) des circuits de chauffage sont disposées de telle sorte que, lorsqu'elles sont alimentées en courant, un trajet de courant à travers le verre fondu entre les électrodes (5) du premier circuit de chauffage et un trajet de courant à travers le verre fondu entre les électrodes (5) du deuxième circuit de chauffage se chevauchent partiellement sur le plan géométrique dans une zone de chevauchement ; et
- la source d'alimentation est un onduleur (1) relié électriquement à un transformateur (3) via une correction du facteur de puissance (2).

12. Récipient de fusion (6) pour chauffer électriquement un verre fondu selon la revendication 11, dans lequel le trajet de courant à travers le verre fondu entre les électrodes (5) du premier circuit de chauffage et le trajet de courant à travers le verre fondu entre les électrodes (5) du deuxième circuit de chauffage sont colinéaires ou se croisent dans la zone de chevauchement.

13. Récipient de fusion (6) pour chauffer électriquement un verre fondu selon la revendication 11 ou 12, dans lequel chaque onduleur (1) fournit, à son circuit de chauffage, un courant dont l'amplitude est commandée indépendamment des autres circuits de chauffage.

14. Récipient de fusion (6) pour chauffer électriquement un verre fondu selon au moins l'une des revendications 11 à 13, dans lequel des lignes de signal (7) relient les onduleurs (1) à un contrôleur commun (8) et le contrôleur commun (8) agit comme un générateur d'horloge générant un signal d'horloge pour les onduleurs (1) et contrôle le décalage de l'angle de phase du courant fourni par ceux-ci aux circuits de chauffage en appliquant indépendamment un retard $\Delta t \geq$ 0 $\mu$s à chaque signal d'horloge.

15. Récipient de fusion (6) pour chauffer électriquement un verre fondu selon au moins l'une des revendications 11 à 14, dans lequel l'onduleur (1) est réglé pour fournir une fréquence de courant d'au moins 20 Hz et d'au plus 25 000 Hz, éventuellement d'au moins 50 Hz et au plus 25 000 Hz, éventuellement d'au moins 100 Hz et au plus 10 000 Hz ou d'au moins 1 000 Hz et au plus 5 000 Hz.

16. Récipient de fusion (6) pour chauffer électriquement un verre fondu selon au moins l'une des revendications 11 à 15, dans lequel le récipient de fusion (6)

- est choisi parmi un réservoir de fusion, un réservoir d'affinage, une zone de conditionnement, un conduit d'écoulement horizontal et un conduit vertical ; et/ou
- a une forme en coupe transversale circulaire, ovale ou polygonale ayant de 3 à 64 angles.

17. Récipient de fusion (6) pour chauffer électriquement un verre fondu selon au moins l'une des revendications 14 à 16, dans lequel le contrôleur commun (8) est configuré pour appliquer le retard $\Delta t \geq 0$ $\mu$s à chaque signal d'horloge en interne et/ou des générateurs de retard (9) sont installés dans les lignes de signal (7) reliant les onduleurs (1) au contrôleur commun (8).

18. Récipient de fusion (6) pour chauffer électriquement un verre fondu selon au moins l'une des revendications 11 à 17, dans lequel

- au moins une électrode (5) parmi les au moins deux électrodes (5) pouvant être immergées dans le verre fondu comprises dans le premier circuit de chauffage est également comprise dans le deuxième circuit de chauffage, et
- les électrodes (5) des premier et deuxième circuits de chauffage sont disposées de telle sorte que, lorsqu'elles sont alimentées en courant, le trajet de courant à travers le verre fondu entre les électrodes (5) du premier circuit de chauffage est identique à la zone de chevauchement avec le trajet de courant à travers le verre fondu entre les électrodes (5) du deuxième circuit de chauffage.

# Figure 1

# Figure 2

**Figure 3**

**Figure 4**

**Figure 5**

**Figure 6**

**Figure 7**

**Figure 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CZ 24918 U1
- DE 102018122017 A1
- WO 2014036979 A1
- JP 9315824 A
- JP 9208228 A
- US 4211887 A
- DE 202019100870 U1
- WO 2020229559 A1
- CN 1721348 A
- US 3818112 A